# EUROPEAN PATENT SPECIFICATION

(11) **EP 3 993 614 B1**
(45) Date of publication and mention of the grant of the patent: **03.04.2024**
(21) Application number: 20737627.8
(22) Date of filing: 30.06.2020
(51) Int. Cl.: A01K 5/00

(54) **A FEED DISPLACEMENT VEHICLE FOR DISPLACING FEED ON A FEED TABLE**
FUTTERVERSTELLFAHRZEUG ZUM VERSTELLEN VON FUTTER AUF EINEM FUTTERTISCH
VÉHICULE DE DÉPLACEMENT DE NOURRITURE POUR DÉPLACER DE LA NOURRITURE SUR UNE TABLE D'ALIMENTATION

(30) Priority: 03.07.2019 SE 1950834
(43) Date of publication of application: 11.05.2022
(73) Proprietor: DeLaval Holding AB, 147 21 Tumba (SE)
(72) Inventor: AGRICOLA, Fedde, 147 21 Tumba (SE)
(74) Representative: DeLaval International AB
(86) International application number: PCT/SE2020/050686
(87) International publication number: WO 2021/002795

(56) References cited:
- GB-A- 1 349 939
- US-A- 5 784 756
- US-B2- 9 663 909

## Description

### TECHNICAL FIELD

The invention relates generally to a feed displacement vehicle for displacing feed on a feed table in a dairy barn. The vehicle comprises a rotatable auger including at least one helical blade for displacing the feed.

### BACKGROUND

Managing and distributing feed is an important part of the daily work in a dairy barn. Feed is provided to a feed table where the dairy animals, such as cows, come to eat. Access to the feed is controlled by a feed fence through which the animals can reach the feed table. However, during eating, the animals also tend to push the feed further away from the feed fence such that it eventually is out of reach. Therefore the feed needs to be repositioned back towards the feed fence. Also it is very beneficial to remix the feed while repositioning it towards the feed fence, to make it more palatable for the animals. Traditionally those tasks have been done by manually, which is both heavy and time consuming. To reduce the amount of manual labour on the farm, many work duties traditionally performed by hand now have been automated, including the displacement of feed on the feed table.

One example of a feed displacement vehicle of the kind having a rotatable auger with at least one helical blade for displacing feed on the feed table is the DeLaval OptiDuo^{™}, which has the advantage of not only pushing the feed, but also redistributing and mixing the feed on the feed table.

US 5784756 A describes a debris cleaning device where debris is displaced towards a midway point of the auger (or rotary brush). At the midway point it is removed by a suction mechanism with a nozzle. US 9663909 B2 and GB 1349939 A relate to snow throwers.

### SUMMARY

It is an object of the invention to provide an improved feed displacement vehicle of the kind having a rotatable auger having at least one helical blade for displacing feed on the feed table.

According to one aspect of the invention, this object is achieved by a feed displacement vehicle for displacing feed on a feed table, according to claim 1, comprising a rotatable auger having an axis of rotation and including at least one helical blade for displacing feed in a direction substantially along the axis of rotation. The helical blade is provided with a brush element arranged such that feed is displaced (in other words brushed) on the feed table by the brush element during operation, in addition to being displaced by the helical blade. This is obtained since the brush element is attached to a portion of the helical blade such that feed is displaced by the helical blade and the brush element while rotating the auger. In essence the invention concerns the synergistic effect of displacing the feed using a helical blade and a brush element. A major part of the load of the feed displacement is taken by the helical blade itself, and the brush element facilitates displacement of feed that is not displaced by the blade.

One particular advantage of this solution is the improved the handling of certain kinds of feed, such as fresh grass. Fresh grass might stick to the feed table in such a manner that it is difficult to displace by the helical blade of the feed displacement vehicle. There is a risk that the vehicle instead moves over it, which could result in poor traction of the drive wheels of the vehicle or other related problems.

Also other kinds of feed might have constituents that are difficult to displace with the helical blade only. The feed might e.g. contain fine constituents that tend to be left on the feed table, such as additives, minerals etc., and the brush element facilitates the displacement and remixing of those constituents with the rest of the feed.

The auger may be generally cylindrical and comprises a central portion supporting the at least one helical blade, wherein the brush element is attached to a radially outer portion of the helical blade with respect to the axis of rotation. The helical blade is typically made of a stiff material, such as plastic or metal, to be able to displace feed that might be rather heavy. The term helical blade should be construed as meaning an element forming a helical feed displacement surface. The helical blade may be made of a solid sheet of material attached to the central portion of the auger, e.g. by welding. Alternatively the auger with the at least one helical blade may be fabricated in one piece using e.g. moulding or blow moulding of plastic.

The brush element may be arranged to be in physical contact with the feed table while displacing feed during operation. By being in contact/touching the feed table the brushing of the feed table by the brush element is improved.

The helical blade may be extending from a first longitudinal end of the auger to a second longitudinal end of the auger and wherein the brush element extends substantially along the whole length of the helical blade. Thereby the helical blade and the brush element form a helix extending over the longitudinal extension of the auger, effectively displacing and brushing the feed over the whole width of the auger.

The brush element comprises a plurality of bristles which extend substantially radially from the helical blade of the auger with respect to the axis of rotation. The bristles have a length to width ratio above 10, typically above 100 or 200. The length of the bristles may be in the range of 1-5 cm, typically 2-3 cm. The ratio of the radial extension of the bristles to the radial extension of the helical blade is 1:10 to 1:20, i.e. in the range of 5-10 %. The bristles are flexible and may be formed of e.g. plastic.

The brush element may comprise a strip of flexible material, such as plastic or rubber or sheet metal, wherein the bristles are supported. The strip of flexible material may be attached to the helical blade. Thereby the brush element may be produced and then attached to the helical blade, following the shape of the helical blade.

The brush element may be removably attached to the helical blade such that it can be replaced when worn out or removed when not needed. The brush element may e.g. be attached to the helical blade using one or more clamps or bolts. The helical blade may form a groove which the brush element may be slid into.

Alternatively the brush element may be fixedly attached to the helical blade. It may be attached by e.g. moulding, adhesive etc.

The auger may be provided with at least two helical blades, both extending from a first longitudinal end of the auger to a second longitudinal end of the auger, forming a double helix, and wherein at least one of the helical blades being provided with the brush element. Thereby the transport of feed by the auger is improved. According to one alternative both (or all) of the helical blades are provided with brush elements to further improve the brushing.

The feed displacement vehicle may be a self-propelling vehicle. Such a self-propelling vehicle may facilitate the handling of the feed since it can operate with little involvement by the operator or farmer.

The feed displacement vehicle has a movement direction during operation, and wherein the auger has a feed conveying direction which is oriented substantially transversely with respect to the movement direction of the feed displacement vehicle. Thereby the vehicle can move along the feed fence and displace the feed sideways to be closer to the feed fence.

### BRIEF DESCRIPTION OF DRAWINGS

The invention is now to be explained more closely by means of preferred embodiments, which are disclosed as examples, and with reference to the attached drawings.
Figure 1 shows a perspective view of a feed displacement vehicle according to an embodiment of the invention.
Figure 2 shows a side view of a feed displacement vehicle according to an embodiment of the invention.
Figure 3a shows a front view of a feed displacement vehicle according to an embodiment of the invention.
Figure 3b shows a front view of a feed displacement vehicle according to another embodiment of the invention.
Figure 4 shows a top view of a feed displacement vehicle according to an embodiment of the invention, during operation of displacing feed on a feed table in a dairy barn.

### DETAILED DESCRIPTION

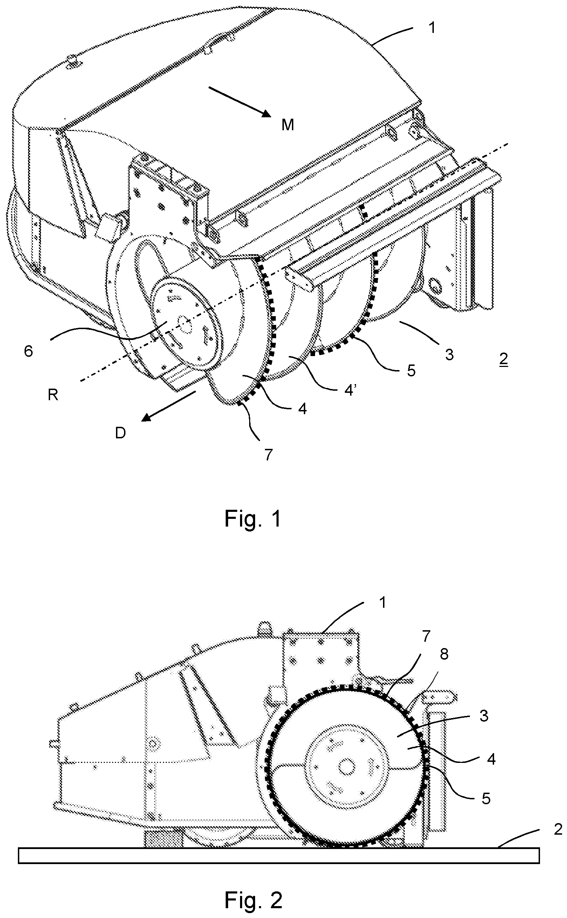

In Figure 1, a feed displacement vehicle 1 is shown, which is used to displace feed lying on a feed table 2. The vehicle is a battery powered self-propelled vehicle having a body which is supported on a set of wheels. It has a general direction of movement M but can also turn in order to navigate in the dairy barn. The vehicle has a cylindrical auger 3 having a central portion 6 supporting two helical blades 4 and 4'. The blades are made of sheet metal, but it is also conceivable to have the blades made of other stiff materials, such as plastic. The auger has a longitudinal extension and is rotatable around an axis of rotation R. The rotation axis is transverse to the direction of movement M, i.e. substantially orthogonal, but may be varied within the scope of the invention as long as there is a sideways displacement of feed during operation. During rotation of the auger, the helical blades engage with the feed lying on the feed table, in front of and underneath the auger, displacing the feed sideways along D, towards the feed fence, but also redistributing and mixing the feed.

In the embodiment shown in Figure 1, one of the two helical blades is provided with a brush element 5 which extends along the outer periphery of the screw formed blade. It is made of a flexible strip of material to which a plurality of flexible bristles is attached, along the length of the flexible strip. The flexible strip is made out of plastic or rubber and the bristles are moulded to the flexible strip. The flexible strip is attached to the helical blade such that the bristles extend in outwards in a radial direction, and radially beyond the extension of the helical blade itself. The brush element may be in a single piece or may comprise several pieces. According to one alternative, the brush element is attached to the radially outer portion of the helical blade by clamping using a plurality of bolts and/or clamps.

Looking at Figure 2, the feed displacement vehicle 1 is seen from the side. The brush element 5 is attached to one of the helical blades 4, and is formed by a flexible strip of material 8 carrying the brush bristles 7. The length of the bristles is such that they make contact with the feed table floor 2 at the point vertically below the rotation axis of the auger when the auger is mounted in the feed displacement vehicle. Also the solution with the brush element has the additional advantage of cleaning the inside of the cover of the rotatable auger, a part of the vehicle which is difficult to clean without removing the auger itself.

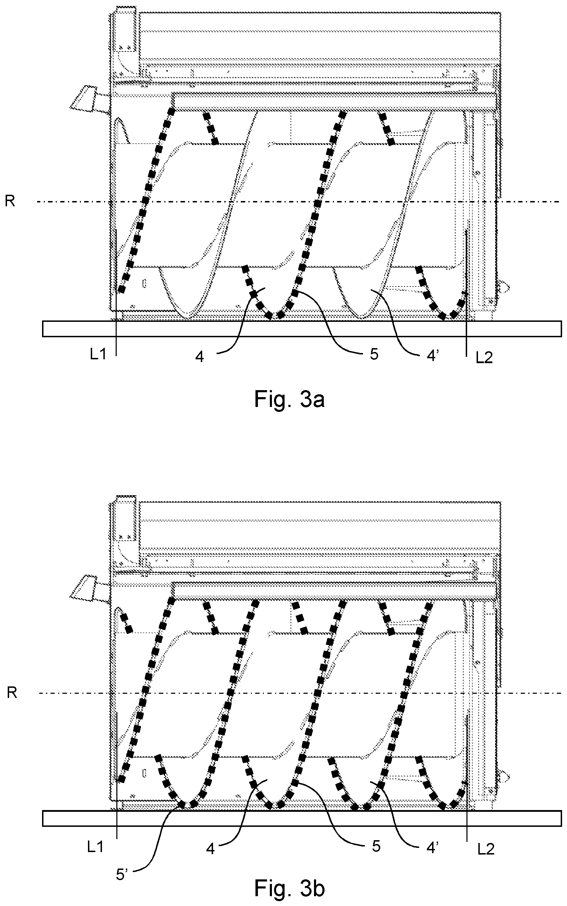

In Figure 3a, a front view of the feed displacement vehicle according to a first embodiment is illustrated, showing the auger rotatable around the axis R, where a first 4 and second 4' helical blade extends around the central portion of the auger, such as to form a double helix. The helical blades 4 and 4' extend from a first longitudinal end L1 of the auger to a second longitudinal end L2 of the auger. The brush element 5 extends substantially along the whole length of one of the helical blades 4. Thereby the whole width of the auger is provided with a brush.

In Figure 3b, a front view of the feed displacement vehicle according to a second embodiment is illustrated, showing a first 4 and second 4' helical blade extend around the central portion of the auger. As before, both helical blades 4 and 4' extend from a first longitudinal end L1 of the auger to a second longitudinal end L2 of the auger. In this embodiment both helical blades 4 and 4' are provided with a brush element 5 and 5' respectively, that extends substantially along the whole length of the helical blades. Thereby the brushing of the feed table is further improved.

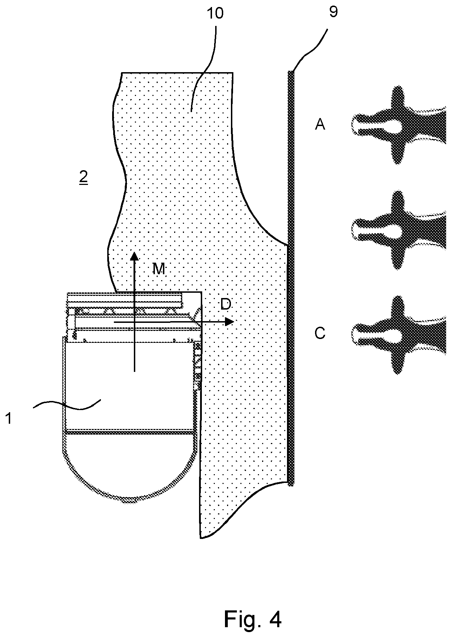

In Figure 4 the operation of the feed displacement vehicle 1 is illustrated. The feed table 2 is separated from the area where the animals are located by means of a feed fence 9. The feed fence is provided with openings such that the animals can reach through with the heads, but are restricted to pass through the fence. On the feed table 2, feed 10 is provided for the animals. The feed may be roughage, forage, silage, maize, hay, fresh grass, etc., and may also include other additives in the form of pellets, minerals, or in liquid form. As explained earlier, the feed tends to be pushed away from the feed fence while the animals are eating, which is illustrated at position A. In order to be within reach for the animals, the feed needs to be pushed back towards the feed fence, which is done by the feed displacement vehicle 1.

The feed displacement vehicle is a self-propelled vehicle which during the operation of displacing feed is moving in the forward direction M. The auger is being rotated and feed located in front of and underneath the auger is displaced by the helical blades in a direction D, towards the feed fence. In addition to the displacement of feed by the helical blades, the brush element engages with the feed that is closest to the feed table and brushes it in the direction D as well. Thereby the traction of the drive wheels of the feed displacement vehicle is improved, since less feed residues are left on the floor where the feed displacement vehicle is moving. Also, even smaller components of the feed, such as additives, are effectively displaced towards the feed fence and made available for the animals to eat. Thereby the overall efficiency of the feed displacement procedure may be obtained.

## Claims

1. A feed displacement vehicle (1) for displacing feed towards the feed fence on a feed table (2), comprising a rotatable auger (3) having an axis of rotation (R), and a feed conveying direction (D) which is substantially along the axis of rotation of the auger, and which is transversely towards the feed fence with respect to the movement direction (M) of the feed displacement vehicle, wherein the auger comprises a central portion (6) supporting at least one helical blade (4, 4') for displacing feed, **characterized in that** the helical blade is provided with a brush element (5) comprising bristles, which are flexible, have a length to width ratio above 10, attached to a radially outer portion of the helical blade and extend substantially radially with respect to the axis of rotation, and arranged such that feed is displaced on the feed table by the brush element during operation, wherein the ratio of the radial extension of the bristles to the radial extension of the helical blade is in the range of 5-10 %.

2. The feed displacement vehicle according to claim 1 wherein the brush element is arranged to make physical contact with the feed table during operation.

3. The feed displacement vehicle according to any one of the preceding claims wherein the helical blade is extending from a first longitudinal end (L1) of the auger to a second longitudinal end (L2) of the auger and wherein the brush element extends substantially along the whole length of the helical blade.

4. The feed displacement vehicle according to any one of the preceding claims wherein the brush element comprises a plurality of bristles (7) and wherein the bristles extend substantially radially from the helical blade of the auger with respect to the axis of rotation.

5. The feed displacement vehicle according to claim 4 wherein the brush element comprises a strip of flexible material (8), such as plastic or rubber, the strip of flexible material being attached to the helical blade, and wherein the bristles are supported by the strip of flexible material.

6. The feed displacement vehicle according to any one of the preceding claims wherein the brush element is removably attached to the helical blade.

7. The feed displacement vehicle according to claim 6 wherein the brush element is attached to the helical blade using one or more clamps or bolts.

8. The feed displacement vehicle according to any one of claims 1 to 5 wherein the brush element is fixedly attached to the helical blade.

9. The feed displacement vehicle according to any one of the preceding claims wherein the auger is provided with at least two helical blades (4, 4'), both extending from a first longitudinal end (L1) of the auger to a second longitudinal end (L2) of the auger, forming a double helix, at least one of the helical blades being provided with the brush element.

10. The feed displacement vehicle according to any one of the preceding claims wherein the feed displacement vehicle (1) is a self-propelling vehicle.

## Patentansprüche

1. Futterabsetzungsfahrzeug (1) zum Absetzen von Futter zu dem Futtergatter hin auf eine Futterplatte (2), umfassend eine drehbare Schnecke (3), die eine Drehachse (R) und eine Futterbeförderungsrichtung (D) aufweist, die im Wesentlichen entlang der Drehachse der Schnecke verläuft, und die zu dem Futtergatter hin in Bezug auf die Bewegungsrichtung (M) des Futterabsetzungsfahrzeugs quer verläuft, wobei die Schnecke einen mittleren Abschnitt (6) umfasst, der mindestens eine schneckenförmige Schaufel (4, 4') zum Absetzen von Futter umfasst, **dadurch gekennzeichnet, dass** die schneckenförmige Schaufel mit einem Bürstenelement (5) versehen ist, umfassend Borsten, die flexibel sind, die ein Länge-zu-Breite-Verhältnis über 10 aufweisen, die an einem radial äußeren Abschnitt der schneckenförmigen Schaufel angebracht sind und sich im Wesentlichen radial in Bezug auf die Drehachse erstrecken, und die derart angeordnet sind, dass Futter auf der Futterplatte durch das Bürstenelement während des Betriebs abgesetzt wird, wobei das Verhältnis der radialen Erstreckung der Borsten zu der radialen Erstreckung der schneckenförmigen Schaufel in dem Bereich von 5-10 % liegt.

2. Futterabsetzungsfahrzeug nach Anspruch 1, wobei das Bürstenelement angeordnet ist, um während des Betriebs physischen Kontakt mit der Futterplatte herzustellen.

3. Futterabsetzungsfahrzeug nach einem der vorstehenden Ansprüche, wobei sich die schneckenförmige Schaufel von einem ersten Längsende (L1) der Schnecke zu einem zweiten Längsende (L2) der Schnecke erstreckt, und wobei sich das Bürstenelement im Wesentlichen entlang der gesamten Länge der schneckenförmigen Schaufel erstreckt.

4. Futterabsetzungsfahrzeug nach einem der vorstehenden Ansprüche, wobei das Bürstenelement eine Vielzahl von Borsten (7) umfasst, und wobei sich die Borsten im Wesentlichen radial von der schneckenförmigen Schaufel der Schnecke in Bezug auf die Drehachse erstrecken.

5. Futterabsetzungsfahrzeug nach Anspruch 4, wobei das Bürstenelement einen Streifen aus flexiblem Material (8), wie Kunststoff oder Gummi, umfasst, wobei der Streifen aus flexiblem Material an der schneckenförmigen Schaufel angebracht ist, und wobei die Borsten durch den Streifen aus flexiblem Material getragen werden.

6. Futterabsetzungsfahrzeug nach einem der vorstehenden Ansprüche, wobei das Bürstenelement an der schneckenförmigen Schaufel entfernbar angebracht ist.

7. Futterabsetzungsfahrzeug nach Anspruch 6, wobei das Bürstenelement unter Verwendung einer oder mehrerer Klammern oder Bolzen an der schneckenförmigen Schaufel angebracht ist.

8. Futterabsetzungsfahrzeug nach einem der Ansprüche 1 bis 5, wobei das Bürstenelement an der schneckenförmigen Schaufel fest angebracht ist.

9. Futterabsetzungsfahrzeug nach einem der vorstehenden Ansprüche, wobei die Schnecke mit mindestens zwei schneckenförmigen Schaufeln (4, 4') versehen ist, die sich beide von einem ersten Längsende (L1) der Schnecke zu einem zweiten Längsende (L2) der Schnecke erstrecken, wodurch eine doppelte Schneckenlinie gebildet wird, wobei mindestens eine der schneckenförmigen Schaufeln mit dem Bürstenelement versehen ist.

10. Futterabsetzungsfahrzeug nach einem der vorstehenden Ansprüche, wobei das Futterabsetzungsfahrzeug (1) ein selbstfahrendes Fahrzeug ist.

## Revendications

1. Véhicule de déplacement d'aliments pour animaux (1) permettant de déplacer des aliments pour animaux en direction du cornadis sur une table d'aliments pour animaux (2), comprenant une vis sans fin rotative (3) ayant un axe de rotation (R), et une direction de transport d'aliments pour animaux (D) qui est sensiblement le long de l'axe de rotation de la vis sans fin, et qui est transversalement en direction du cornadis par rapport à la direction de mouvement (M) du véhicule de déplacement d'aliments pour animaux, dans lequel la vis sans fin comprend une partie centrale (6) supportant au moins une pale hélicoïdale (4, 4') permettant de déplacer des aliments pour animaux, **caractérisé en ce que** la pale hélicoïdale est pourvue d'un élément de brosse (5) comprenant des poils, qui sont flexibles, ont un rapport de la longueur à la largeur supérieur à 10, attachés à une partie radialement externe de la pale hélicoïdale et s'étendent de façon sensiblement radiale par rapport à l'axe de rotation, et agencés de sorte que des aliments pour animaux sont déplacés sur la table d'aliments pour animaux par l'élément de brosse pendant le fonctionnement, dans lequel le rapport de l'extension radiale des poils à l'extension radiale de la pale hélicoïdale est dans la plage de 5 à 10 %.

2. Véhicule de déplacement d'aliments pour animaux selon la revendication 1 dans lequel l'élément de brosse est agencé pour réaliser un contact physique avec la table d'aliments pour animaux pendant le fonctionnement.

3. Véhicule de déplacement d'aliments pour animaux selon l'une quelconque des revendications précédentes dans lequel la pale hélicoïdale s'étend d'une première extrémité longitudinale (L1) de la vis sans fin à une seconde extrémité longitudinale (L2) de la vis sans fin et dans lequel l'élément de brosse s'étend sensiblement sur toute la longueur de la pale hélicoïdale.

4. Véhicule de déplacement d'aliments pour animaux selon l'une quelconque des revendications précédentes dans lequel l'élément de brosse comprend une pluralité de poils (7) et dans lequel les poils s'étendent de façon sensiblement radiale à partir de la pale hélicoïdale de la vis sans fin par rapport à l'axe de rotation.

5. Véhicule de déplacement d'aliments pour animaux selon la revendication 4 dans lequel l'élément de brosse comprend une bande de matériau flexible (8), tel que du plastique ou du caoutchouc, la bande de matériau flexible étant attachée à la pale hélicoïdale, et dans lequel les poils sont supportés par la bande de matériau flexible.

6. Véhicule de déplacement d'aliments pour animaux selon l'une quelconque des revendications précédentes dans lequel l'élément de brosse est attaché de manière amovible à la pale hélicoïdale.

7. Véhicule de déplacement d'aliments pour animaux selon la revendication 6 dans lequel l'élément de brosse est attaché à la pale hélicoïdale à l'aide d'un(e) ou plusieurs pinces ou boulons.

8. Véhicule de déplacement d'aliments pour animaux selon l'une quelconque des revendications 1 à 5 dans lequel l'élément de brosse est attaché fixement à la pale hélicoïdale.

9. Véhicule de déplacement d'aliments pour animaux selon l'une quelconque des revendications précédentes dans lequel la vis sans fin est pourvue d'au moins deux pales hélicoïdales (4, 4'), s'étendant l'une et l'autre d'une première extrémité longitudinale (L1) de la vis sans fin à une seconde extrémité longitudinale (L2) de la vis sans fin, en formant une double hélice, au moins l'une des pales hélicoïdales étant pourvue de l'élément de brosse.

10. Véhicule de déplacement d'aliments pour animaux selon l'une quelconque des revendications précédentes dans lequel le véhicule de déplacement d'aliments pour animaux (1) est un véhicule autopropulsé.
